# EUROPÄISCHE PATENTSCHRIFT

(11) **EP 3 787 889 B1**
(45) Veröffentlichungstag und Bekanntmachung des Hinweises auf die Patenterteilung: **06.07.2022**
(21) Anmeldenummer: 19722821.6
(22) Anmeldetag: 29.04.2019
(51) Int. Cl.: B29C 73/02, B21D 1/06

(54) **WERKZEUG UND VERFAHREN ZUR REPARATUR VON FLÄCHIGEN MATERIALIEN**
TOOL AND METHOD FOR REPAIRING PLANAR MATERIALS
OUTIL ET PROCÉDÉ DE RÉPARATION DE MATÉRIAUX PLATS

(30) Priorität: 02.05.2018 DE 102018110520
(43) Veröffentlichungstag der Anmeldung: 10.03.2021
(73) Patentinhaber: Lack- und Waschcenter Seidl GmbH, 85254 Sulzemoos (DE)
(72) Erfinder: SEIDL, Rainer, 85235 Odelzhausen (DE)
(74) Vertreter: Wittmann, Ernst-Ulrich
(86) Internationale Anmeldenummer: PCT/EP2019/060955
(87) Internationale Veröffentlichungsnummer: WO 2019/211245

(56) Entgegenhaltungen:
- DE-A1-102005 005 703
- DE-T2- 69 603 623
- US-A- 4 743 468
- US-A1- 2006 158 001

## Beschreibung

Die vorliegende Erfindung betrifft ein Werkzeug zur Reparatur von flächigen Materialien, sowie ein Verfahren zur Reparatur von flächigen Materialien durch Verwendung des erfindungsgemäßen Werkzeugs. Insbesondere betrifft die Erfindung ein Werkzeug zur Reparatur von strukturierten Oberflächen und ein Verfahren zur Verwendung des Werkzeuges.

Eine Beschädigung an einer Oberfläche, insbesondere an einem Blech, kann aus verschiedenen Gründen auftreten. Besonders strukturierte Bleche, die z.B. als Außenwände eines Wohnmobils, eines Anhängers oder dergleichen benutzt werden, können leicht eine Beschädigung, zum Beispiel wegen kleiner Auffahrunfälle, Steinschläge oder Hagelschäden, aufweisen.

Diese Beschädigungen ruinieren die Optik des Wohnmobils und führen zu einem erheblichen Wertverlust des ganzen Fahrzeugs. Es existieren daher verschiedene Methoden und Werkzeuge im Stand der Technik, um solche Beschädigungen zu reparieren.

Es ist zum Beispiel im Stand der Technik üblich, bei einer Beschädigung eines Bleches, insbesondere z.B. bei der Beschädigung einer Außenwand eines Wohnwagens, die beschädigte Oberfläche vollständig zu entfernen und durch eine neue Oberfläche, also eine neue Außenwand, zu ersetzen. Dieses Verfahren ist jedoch besonders bei kleinen Blechschäden sehr kostspielig und mit einem im Verhältnis zum Schaden nicht angemessenen Aufwand verbunden.

Werkzeuge sowie Verfahren zur Reparatur von flächigen Materialien, insbesondere von strukturierten flächigen Materialien, bei dem die gesamte Oberfläche nicht ausgetauscht wird, sind auch im Stand der Technik bekannt.

Oft werden die Beschädigungen manuell repariert z.B. durch Auftragen von einer Reparaturmasse auf die Schadensstelle und durch nachträgliches Spachteln der Schadensstelle. Dieses Verfahren ist sehr ungenau und hinterlässt eindeutige Reparaturspuren auf einer reparierten Oberfläche, so dass die Optik der Oberfläche stark beeinträchtigt wird.

Insbesondere, falls die zu reparierende Oberfläche eine Struktur bzw. ein Muster aufweist, wird jegliche Reparatur, die mittels der Werkzeuge des Standes der Technik erfolgt, sofort mit bloßem Auge sichtbar. Eine Wiederherstellung der Struktur im Schadensbereich ist diesbezüglich nur schwer möglich.

Werkzeuge mit denen eine Struktur auf dem Blech wiederhergestellt werden kann, die aus dem Stand der Technik bekannt sind, bestehen aus verschiedenen Einzelteilen, die nur schwer allein bedienbar sind, und benötigen somit lange Zeit und einen erhöhten Aufwand. Weiterhin ist es mittels der Werkzeuge aus dem Stand der Technik nicht möglich eine Struktur die möglicherweise in der Schadenstelle vorhanden war, so wiederherzustellen, dass die Reparaturstelle mit bloßem Auge nicht mit dem Rest der unbeschädigten Oberfläche unterscheidbar ist.

Im Stand der Technik ist ein Verfahren zur Reparatur lokaler Schäden als DE 696 03 623 T2 bekannt, welches zum Reparieren einer örtlich beschädigten, eingebeulten Oberfläche einer Wand unter Verwendung eines Füllmaterials Verwendung finden kann. Dokument DE 696 03 623 T2 offenbart ein Werkzeug zur Reparatur von flächigen Materialien gemäß dem Oberbegriff von Anspruch 1.

Es sind somit ein Werkzeug sowie ein Verfahren nötig, mit welchem insbesondere eine durch eine Beschädigung verlorene Struktur an der zu reparierenden Oberfläche bei der Reparatur wiederhergestellt werden können.

Ausgehend von diesem Stand der Technik ist es Aufgabe der vorliegenden Anmeldung ein Werkzeug bereitzustellen, das einfach zu bedienen ist und die Nachteile der Werkzeuge des Standes der Technik zumindest teilweise überwindet. Weiterhin wird ein Verfahren zum Reparieren von flächigen Materialien bereitgestellt, das durch die Verwendung des erfindungsgemäßen Werkzeugs zumindest teilweise praktikabler und zumindest teilweise schneller verwendet werden kann im Gegensatz zu den Werkzeugen des Standes der Technik.
insbesondere ist es Aufgabe der vorliegenden Erfindung ein Werkzeug sowie ein Verfahren bereitzustellen, bei dem eine beschädigte Fläche, die ein Muster aufweist, repariert und das Muster wiederhergestellt werden kann.

Die Aufgabe wird durch ein Werkzeug zur Reparatur von flächigen Materialien gemäß Anspruch 1 gelöst. Bevorzugte Ausführungsformen des Werkzeugs sind Gegenstand der jeweiligen Unteransprüche. Die Aufgabe wird weiterhin durch ein Verfahren zur Reparatur von flächigen Materialien gemäß Anspruch 11 gelöst. Bevorzugte Ausführungsformen des Verfahrens sind Gegenstand der jeweiligen Unteransprüche des Anspruchs 11.

Das erfindungsgemäße Werkzeug zur Reparatur von flächigen Materialien wie beispielweise Blech, umfasst eine Arbeitsplatte, Halteelemente, einen Abdruckbereich und wenigstens ein Positionierungshilfsmittel.

Gemäß dieser erfindungsgemäßen Ausführungsform ist die Arbeitsplatte zumindest teilweise durchsichtig und weist eine Oberseite und eine Unterseite auf, wobei die Unterseite mit Bezug auf eine Oberfläche des flächigen Materials angeordnet ist.

Die Halteelemente sind in dieser beispielhaften Ausführungsform insbesondere Vakuumhalteelemente, welche an der Unterseite der Arbeitsplatte so angeordnet sind, dass die Arbeitsplatte im Wesentlichen parallel an der Oberfläche des flächigen Materials angeordnet ist und mit dieser lösbar verbunden werden kann.

Der Abdruckbereich ist an der Unterseite der Arbeitsplatte angeordnet und ist wenigstens an Abschnitten seines Umfangs mit einem lösbaren Dichtelement begrenzt, wobei der Abdruckbereich ein Volumen, welches durch wenigstens die Unterseite der Arbeitsplatte, das Dichtelement und bei Montage des Werkzeugs durch die Oberfläche des anordbaren flächigen Material, bestimmt.

Mindestens ein Positionierungshilfsmittel ist in diesem erfindungsgemäßen Beispiel im Abdruckbereich angeordnet und dient zur reproduzierbaren Positionierung eines in dem Abdruckbereich geformten Abdrucks.

Das erfindungsgemäße Werkzeug ist besonders dafür geeignet Bleche sowie strukturierte Bleche, die eine Beschädigung aufweisen, zu reparieren. Bei strukturierten Oberflächen, die insbesondere eine sich wiederholende Strukturform aufweisen, kann mittels des erfindungsgemäßen Werkzeugs und Verfahrens die Struktur wiederhergestellt werden. Beispiele für solche strukturierten Oberflächen sind z.B. Außenwände von Wohnmobilen sowie von Anhängern oder dergleichen.

Das Werkzeug umfasst unter anderem eine zumindest teilweise durchsichtige Arbeitsplatte, die eine Unterseite und eine Oberseite aufweist, und wobei die Unterseite bei einem erfindungsgemäßen Reparaturverfahren gegen eine zu reparierende Oberfläche angeordnet wird. Die Arbeitsplatte weist beispielsweise eine rechteckige Form auf, jedoch kann sie auch rRund sein oder jegliche beliebige Form aufweisen. Die Dicke der Arbeitsplatte, also der senkrechte Abstand zwischen Unterseite und Oberseite, sollte so ausgewählt sein, dass die Arbeitsplatte unter einem hohen Druck eine hohe Bruchfestigkeit, insbesondere eine hohe Biegezugfestigkeit aufweist.

Die Durchsichtigkeit, bzw. teilweise Durchsichtigkeit der Arbeitsplatte ist vorteilhaft, um eine verbesserte Sicht während dem Reparaturverfahren zu gewährleisten und insbesondere, um Markierungen die möglicherweise auf der zu reparierenden Oberfläche gemacht werden, besser zu visualisieren. Folglich kann die Arbeitsplatte aus einem Material bestehen, welches aus einer Gruppe ausgewählt wird, welche Kunststoffe, Glas, Plastik, Plexiglas oder dergleichen umfasst, solang die teilweise Durchsichtigkeit gewährleistet wird.

Auf der Unterseite und/oder Oberseite der erfindungsgemäßen Arbeitsplatte können ferner mindestens zwei senkrecht zueinander positionierte Maßskalen angeordnet sein, so dass eine Positionsbestimmung der Arbeitsplatte an der zu reparierenden Oberfläche erleichtert wird. Die Maßskalen sind insbesondere bei der Reparatur einer Oberfläche mit einer sich wiederholenden Struktur vorteilhaft, da es somit leichter möglich ist, einen Bereich auf der Oberfläche zu bestimmen, welcher die gleiche Struktur aufweist wie der Bereich der Oberfläche, auf dem der Schaden angeordnet ist.

Die Maßskalen können beispielsweise herkömmliche Zentimeterangaben sein, jedoch ist es auch möglich, eine der zu reparierenden Oberfläche spezifische Skalenangabe, die z.B. lediglich die Wiederholung der Struktur zum Beispiel 24 cm angibt, bereitzustellen,

Die Maßskalen sollten vorteilhaft so ausgewählt werden, dass es zumindest möglich sein soll, leicht zwei Punkte mit gleichem Muster zu identifizieren.

Um eine Befestigung der Arbeitsplatte an einer strukturierten Oberfläche zu ermöglichen, weist die Arbeitsplatte Halteelemente auf, die insbesondere Vakuumflachsauger sein können. Diese werden üblicherweise an den Ecken der Arbeitsplatte bzw. an den Enden der Arbeitsplatte angeordnet. Die Vakuumflachsauger können vorteilhafterweise an einem Vakuumgenerator angeschlossen sein, so dass die Höhe des Vakuums an allen Vakuumflachsauger, und vorteilhafter an jedem einzelnen Vakuumflachsauger unabhängig, einstellbar ist. Beispiele für Vakuumgeneratoren sind z.B. Handpumpen zur Vakuumherstellung oder automatische Vakuumgeneratoren.

Die Benutzung von Vakuumflachsaugern ist besonders vorteilhaft da die Unebenheiten einer strukturierten Oberfläche kompensiert werden können und eine im Wesentlichen parallele Anordnung der Unterseite der Arbeitsplatte an die zu reparierende Oberfläche gewährleistet werden kann.

Da durch das erfindungsgemäße Reparaturverfahren viel Kraft auf die Halteelemente ausgegeübt wird, entsteht ein hoher Verschleiß an den Halteelementen. Dies fordert ein regelmäßiges Auswechseln der Halteelemente, weswegen es insbesondere vorteilhaft ist, sowie im Sinne der vorliegenden Erfindung, dass die Halteelemente lösbar an der Unterseite der Arbeitsplatte angeordnet werden können. Die lösbare Verbindung der Halteelemente mit der Arbeitsplatte kann beispielsweise mittels einer Gewindeverbindung oder eine Rastverbindung erreicht werden.

Es ist auch möglich, nicht lösbare Halteelemente bereitzustellen, die zum Beispiel einstückig an der Unterseite der Arbeitsplatte angeordnet sind. In solchen beispielhaften Ausführungsformen ist es vorteilhaft, wenn zumindest die Gummioberfläche der Vakuumflachsauger jeweils austauschbar ist.

Damit eine Verbindung zwischen dem Vakuumgenerator und dem Vakuumflachsauger entsteht, kann es insbesondere vorteilhaft sein, wenn die Vakuumflachsauger auf der Oberseite der Arbeitsplatte eine Öffnung bzw. eine Verbindungsmöglichkeit aufweisen, mit der beispielsweise ein Verbindungsschlauch bzw. ein Vakuumschlauch verbunden werden kann. Es ist jedoch auch möglich, normale Vakuumflachsauger ohne externen Anschlussmöglichkeiten wie sie im Stand der Technik bekannt sind an die Arbeitsplatte anzuordnen.

Gemäß einer weiteren beispielhaften Ausführungsform weist das erfindungsgemäße Werkzeug einen Abdruckbereich auf. Dieser ist an der Unterseite der Arbeitsplatte angeordnet und vorzugsweise im Wesentlichen mittig an der Unterseite der Arbeitsplatte angeordnet.

Gemäß einer weiteren Ausführungsform des erfindungsgemäßen Werkzeugs ist der Abdruckbereich wenigstens an Abschnitten seines Umfangs mit einem lösbaren Dichtelement begrenzt. Dabei ist es vorteilhaft, wenn mindestens 50% des Umfangs des Abdruckbereichs durch das Dichtelement begrenzt sind; insbesondere können bis zu 90% des Umfangs des Abdruckbereiches durch das Dichtelement begrenzt sein. In einigen Ausführungsformen kann im Wesentlichen auch der gesamte Umfang des Abdruckbereichs durch das Dichtelement begrenzt werden. Vorteilhaft bei einer Begrenzung des gesamten Umfangs des Abdruckbereichs ist insbesondere die genauere Regelung der Gesamtgröße des Abdrucks bei seiner Erstellung.

Gemäß einer weiteren vorteilhaften Ausführungsform kann das Dichtelement wenigstens gegenüber Flüssigkeiten, insbesondere viskosen Flüssigkeiten, dicht sein. Eine im Abdruckbereich eingeführte viskose Flüssigkeit kann somit aus dem durch das Dichtelement begrenzten Umfang des Abdruckbereiches nicht austreten. Gemäß einer weiteren beispielhaften Ausführungsform ist es besonders vorteilhaft, wenn das Dichtelement zumindest teilweise luftdurchlässig ist, damit beim Einführen einer viskosen Flüssigkeit in dem Abdruckbereich die Luft durch das Dichtelement fliehen kann. Bei einer solchen Ausführungsform des erfindungsgemäßen Werkzeugs kann das Dichtelement auch beinahe den vollen Umfang des Abdruckbereichs begrenzen.

Vorzugsweise und gemäß einer weiteren beispielhaften Ausführungsform weist das Dichtelement im Querschnitt eine U-Form bzw. V-Form auf. Durch diese Form wird erreicht, dass bei einem erfindungsgemäßen Reparaturverfahren, auf dem später in der vorliegenden Beschreibung mehr im Detail eingegangen wird, die in dem Abdruckbereich eingeführte viskose Flüssigkeit durch das Dichtelement enthalten wird und sich nicht auf die Arbeitsplatte verteilt.

Erfindungsgemäß kann es auch vorteilhaft sein, wenn das Dichtelement eine adhäsive Seite aufweist, durch welches das Dichtelement an die Arbeitsplatte lösbar befestigbar ist.

Bei dem erfindungsgemäßen Reparaturverfahren wird das Dichtelement gegen die zu reparierende Oberfläche gedrückt, somit entsteht ein hoher Verschleiß wodurch das Dichtelement an Dichtigkeit verlieren kann. Eine lösbare Befestigung ermöglicht somit eine vorteilhafte und einfache Auswechslung des Dichtelements in solchen Fällen und garantiert somit die mehrfache Verwendung des Werkzeugs.

Weiterhin kann es im erfindungsgemäßen Verfahren auch nützlich sein, das Dichtelement nach der Erstellung des Abdrucks komplett zu entfernen.

Das Dichtelement kann aus einer Gruppe ausgewählt werden, welche Moosgummi, Kunststoff wie z.B. Silikon, Gummi, Polyurethane, PVC oder dergleichen umfasst.

Da bei dem erfindungsgemäßen Reparaturverfahren das Dichtelement gegen die zu reparierende Oberfläche gepresst wird, sind die Maße des Dichtelements sehr wichtig für eine erfolgreiche Reparatur. Dabei spielt zum Beispiel insbesondere die in Bezug auf die Unterseite der Arbeitsplatte senkrechte Höhe des Dichtelements eine große Rolle. Ist die Höhe zu niedrig, wird das Dichtelement entweder zu wenig oder sogar gar nicht gegen die zu reparierende Oberfläche gedrückt. Eine in den Abdruckbereich eingeführte Abdruckmasse würde somit nicht im Abdruckbereich begrenzt werden und würde sich auf die Arbeitsplatte verteilen.

Ist hingegen die Höhe zu groß, ist es nicht möglich, die Arbeitsplatte mittels der Halteelemente zu befestigen, da diese nicht mit der Oberfläche in Kontakt kommen.

Dementsprechend kann gemäß einer beispielhaften erfindungsgemäßen Ausführungsform das Dichtelement in Bezug auf die Unterseite der Arbeitsplatte eine senkrechte Höhe von zwischen 1 mm und 20 mm, bevorzugt zwischen 3 mm und 10 mm und besonders bevorzugt ungefähr 5 mm, aufweisen.

Weiterhin kann das Verhältnis zwischen der Höhe des Dichtelements und dem Vorsprung der Halteelemente bzw. Vakuumflachsauger im entspannten Zustand bei 1 zu 1/4, bevorzugt 1 zu 1/2, besonders bevorzugt 1 zu 3/4 und insbesondere bei 1 zu 1 liegen.

Der Abdruckbereich bestimmt somit ein Volumen, welches durch wenigstens die Unterseite der Arbeitsplatte, das Dichtelement und bei Montage des Werkzeugs durch die Oberfläche des anordbaren flächigen Materials bestimmt wird. In diesem Volumen wird nachträglich während des erfindungsgemäßen Verfahren eine viskose Flüssigkeit, zum Beispiel eine Abdruckmasse, eingeführt.

Gemäß einer weiteren Ausführungsform des erfindungsgemäßen Werkzeugs beträgt das vom Abdruckbereich bestimmte Volumen zwischen ca. 35 cm³ und ca. 250 cm³, bevorzugt zwischen ca. 72 cm³ und ca. 180 cm³, besonders bevorzugt zwischen ca. 100 cm³ und ca. 150 cm³, und insbesondere ca. 120 cm³.

Umso großächiger der Abdruckbereich gewählt wird, und somit umso größer das Volumen des Abdrucks gewählt wird, desto weitflächiger kann die zu reparierende Beschädigung sein. Umso kleiner das Volumen jedoch gewählt wird, desto weniger Abdruckmasse zur Erstellung des Abdruckes wird benötigt; dadurch tritt eine erhebliche Kostenersparnis ein. Es ist deswegen nötig, in Abhängigkeit der Schadensgröße, die Größe des Abdruckbereichs und somit das Volumen des Abdruckes angemessen zu wählen.

Das erfindungsgemäße Werkzeug und insbesondere die erfindungsgemäße Arbeitsplatte weist weiterhin mindestens ein Positionierungshilfsmittel auf, welches im Abdruckbereich angeordnet ist.

Durch das mindestens eine Positionierungshilfsmittel kann ein Abdruck, welcher in dem Abdruckbereich geformt wird, reproduzierbar an die Arbeitsplatte positioniert werden. Die reproduzierbare Positionierung des Abdruckes ist, wie nachträglich im Detail erläutert wird, fundamental für das erfindungsgemäße Reparaturverfahren der vorliegenden Erfindung.

Gemäß einer beispielhaften erfindungsgemäßen Ausführungsform kann das mindestens eine Positionierungshilfsmittel eine Vertiefung oder ein Vorsprung in der Arbeitsplatte sein.

Der durch das erfindungsgemäße Reparaturverfahren der vorliegenden Erfindung hergestellte Abdruck weist dementsprechend eine Negativform des mindestens einen Positionierungshilfsmittels auf. Ist das mindestens eine Positionierungshilfsmittel ein Vorsprung, enthält der Abdruck eine dem Vorsprung entsprechende Vertiefung; ist das mindestens eine Positionierungshilfsmittel eine Vertiefung so enthält der Abdruck einen der Vertiefung entsprechenden Vorsprung.

Da sich das mindestens eine Positionierungshilfsmittel in dem Abdruckbereich befindet, ändert sich das von dem Abdruckbereich definierten Volumen auch in Abhängigkeit der Größe und der Form des mindestens einen Positionierungshilfsmittels.

Ist das mindestens eine Positionierungshilfsmittel eine Vertiefung, so wird das von dem Abdruckbereich definierte Volumen um das Volumen der Vertiefung vergrößert. Vorteilhaft bei einer Ausführungsform, bei der das mindestens eine Positionierungshilfsmittel eine Vertiefung ist, ist, dass die Vertiefung auch nachträglich und manuell in die Arbeitsplatte z.B. durch Fräsen erstellt werden kann oder eine zusätzliche Vertiefung hinzugefügt werden kann.

Die erfindungsgemäße Ausführungsform der Positionierungshilfsmittel, bei dem das mindestens eine Positionierungshilfsmittel ein Vorsprung ist, weist hingegen den Vorteil auf, dass sich das von dem Abdruckbereich definierte Volumen verringert, weswegen auch das Volumen des Abdruckes sich verringert und dadurch eine Kostenersparnis in der Materialbenutzung hervortritt

Um die Reproduzierbarkeit der Positionierung des Abdruckes zu gewährleisten, kann gemäß einer weiteren beispielhaften Ausführungsform das mindestens eine Positionierungshilfsmittel eine unsymmetrische Form, wie beispielsweise eine ungleichseitige Dreiecksform, aufweien.

Es ist selbstverständlich, dass falls die Form des mindestens einen Positionierungshitfsmitteis unsymmetrisch ist, der Abdruck, der auf seine Oberfläche eine den Positionierungshilfsmittel entsprechende Negativform aufweist, nur in einer Position und nur entsprechend des Positionierungshilfsmittels auf die Arbeitsplatte angeordnet werden kann. Somit kann durch ein einzelnes unsymmetrisches Positionierungshilfsmittel der Abdruck reproduzierbar auf die Arbeitsplatte angeordnet werden.

Gemäß einer weiteren beispielhaften Ausführungsform des erfindungsgemäßen Werkzeugs weist die Arbeitsplatte mindestens drei Positionierungshilfsmittel auf.

Bei dieser Ausführungsform ist es besonders vorteilhaft, dass die Positionierungshilfsmittel, unabhängig ob sie als Vorsprünge oder Vertiefungen bereitgestellt werden, keine unsymmetrische Form aufweisen müssen, um die reproduzierbare Positionierung des Abdruckes zu gewährleisten. Es reicht hingegen, dass die mindestens drei Positionierungshilfsmittel so angeordnet sind, dass sie die Ecken einer unsymmetrischen geometrischen Form definieren.

Selbstverständlich kann gemäß einer weiteren erfindungsgemäßen beispielhaften Ausführungsform wenigstens eines der mehreren Positionierungshilfsmittel ein Vorsprung sein und die restlichen Positionierungshilfsmittel Vertiefungen. Es sind jedoch alle möglichen Kombinationen aus Vertiefungen und Vorsprünge möglich und auch im Sinne der Erfindung.

Um ein vorteilhaftes Verhältnis zwischen der Größe der Positionierungshilfsmittel und dem Aufwand zur Produktion der Positionierungshilfsmittel zu gewährleisten, können die Positionierungshilfsmittel einen Durchmesser zwischen 5 mm und 15 mm, bevorzugt zwischen 6 mm und 12 mm und besonders bevorzugt zwischen 9 mm und 10 mm, aufweisen.

Durch die oben beschriebenen unterschiedlichen beispielhaften Ausführungsformen des erfindungsgemäßen Werkzeuges wird ein Werkzeug bereitgestellt, das die Nachteile des Standes der Technik zumindest teilweise löst. Durch die Bereitstellung eines solchen Werkzeugs wird auch ein erfindungsgemäßes Verfahren zur Reparatur von flächigen Materialien bereitgestellt. Somit werden die Nachteile in den Verfahren des Standes der Technik, durch das erfindungsgemäße Verfahren gemäß Anspruch 11, zumindest teilweise gelöst. Bevorzugte Ausführungsformen des Verfahrens sind Gegenstand der jeweiligen Unteransprüche.

Das erfindungsgemäße Verfahren zur Reparatur von flächigen Materialien mittels einer beliebigen Ausführungsform des oben beschriebenen und beanspruchten Werkzeuges umfasst die Schritte:
a) Bestimmen eines Beschädigungsbereichs einer Oberfläche eines flächigen Materials;
b) Anordnen der Arbeitsplatte an einem, den Beschädigungsbereich korrespondierenden unbeschädigten Bereich der Oberfläche des flächigen Materials;
c) Erstellen eines Abdrucks des unbeschädigten Bereichs, welches eine gleiche Oberflächenstruktur wie der Beschädigungsbereich der zu reparierenden Oberfläche aufweist;
d) Positionieren des Abdrucks auf der Arbeitsplatte mittels der Positionierungshilfsmittel und Anordnen der Arbeitsplatte über den Beschädigungsbereich; und
e) Einfüllen einer Füllmasse in dem Bereich zwischen dem Beschädigungsbereich und dem Abdruck.

Diese beispielhafte Ausführungsform des erfindungsgemäßen Verfahrens ermöglicht eine erfindungsgemäße Reparatur einer Oberfläche eines flächigen Materials und insbesondere eines strukturierten Blechs bzw. Oberfläche. Dafür wird erfindungsgemäß im Schritt a) ein Beschädigungsbereich um die Beschädigung herum definiert. Dieser kann beispielsweise auf der Oberfläche markiert werden.

Der Beschädigungsbereich sollte nicht größer als nötig gewählt werden, da dies unnötigen zusätzlichen Aufwand und Material benötigt. Wird der Beschädigungsbereich zu klein bzw. zu nah an der eigentlichen Beschädigung bestimmt, führt dies andererseits zu einer verschlechterten Reparatur. Insbesondere bei der Reparatur von strukturierten Oberflächen würde die Wahl eines zu kleinen Beschädigungsbereichs zu einem verschlechterten Ergebnis führen, insbesondere mit Hinblick auf die optischen Eigenschaften.

Vorteilhaft ist es daher, wenn beim erfindungsgemäßen Verfahren der Beschädigungsbereich mit mindestens 1 cm und nicht mehr als 5 cm, insbesondere mit mindestens 2 cm und nicht mehr als 4 cm und besonders bevorzugt circa 3 cm Abstand um die Beschädigung herum bestimmt wird.

Im Schritt b) wird die Arbeitsplatte an einem unbeschädigten Bereich der Oberfläche angeordnet. Im Falle, dass die Oberfläche ein Muster aufweist, sollte das Muster der unbeschädigten Fläche mit dem Muster der beschädigten Fläche übereinstimmen.

Beispielsweise wiederholt sich eine Struktur eines Blechs alle 24 cm, sowohl in vertikaler als auch in horizontaler Richtung. Die tatsächliche Wiederholung ändert sich jedoch in Abhängigkeit der Oberfläche und muss für jede Oberfläche einzeln nachgeprüft werden. Durch einfaches Messen kann also gewährleistet werden, dass die Arbeitsplatte tatsächlich auf einer unbeschädigten Oberfläche, welche das gleiche Muster aufweist wie der Beschädigungsbereich, angeordnet wird. Falls das erfindungsgemäße Werkzeug gemäß einiger Ausführungsformen Maßskalen umfasst, ist die Anordnung mittels der Maßskalen weiterhin vereinfacht.

Nach der Anordnung der Arbeitsplatte an der unbeschädigten Stelle, wird ein Abdruck des unbeschädigten Bereichs erstellt. Falls die zu reparierende Oberfläche eine Struktur aufweist, wird diese auch auf dem Abdruck vorhanden sein. Der Abdruck kann entweder unabhängig von dem Werkzeug erstellt werden oder mittels des erfindungsgemäßen Werkzeugs. Die Erstellung des Abdrucks durch das erfindungsgemäße Werkzeug bringt den Vorteil mit sich mit, dass weitere Werkzeuge nicht benötigt werden.

Sobald der Abdruck bereitgestellt worden ist, wird der Abdruck durch Zuhilfenahme der Positionierungshilfsmittel an die Arbeitsplatte positioniert; die Arbeitsplatte wird entsprechend auf den beschädigten Bereich angeordnet. Falls die Oberfläche eine Struktur aufweist, werden die Arbeitsplatte und der Abdruck so an der Oberfläche angeordnet, dass die Struktur des Abdrucks mit der Struktur der Oberfläche übereinstimmt.

Als letzter Schritt wird eine Füllmasse zwischen dem Beschädigungsbereich und dem Abdruck eingefüllt, um den Schaden zu reparieren.

Gemäß einer weiteren beispielhaften Ausführungsform des erfindungsgemäßen Verfahrens kann das Anbringen der Arbeitsplatte an der Oberfläche des flächigen Materials mittels Vakuumflachsauger und vorzugsweise mittels eines externen Vakuums erfolgen.

Insbesondere ist es gemäß einer weiteren beispielhaften Ausführungsform des erfindungsgemäßen Verfahrens möglich, die Höhe des Vakuums jedes Vakuumflachsaugers unabhängig voneinander einzustellen.

Vorteilhaft bei der Verwendung von Vakuumflachsaugern ist deren leichte Bedienung sowie die Möglichkeit, mittels eines externen Vakuums jeden einzelnen Vakuumflachsauger unabhängig voneinander zu regeln. Somit kann die Höhe des Vakuums unabhängig für alle Vakuumflachsauger verschieden eingestellt werden. Dies führt zu einer verbesserten Regelung des Kraftaufwands bei der Anordnung der Arbeitsplatte an die zu reparierende Oberfläche.

Falls zum Beispiel die Oberfläche des flächigen Materials eine sehr unebene Struktur aufweist, ist es möglich, mittels der unabhängigen Regelung der Vakuumflachsauger diese Unebenheiten entgegenzukommen. Eine stabile, sowie im Wesentlichen parallele Anordnung der Arbeitsplatte an die Oberfläche des flächigen Materials kann somit gewährleistet werden, wodurch die Präzision des Reparaturverfahrens weiterhin erhöht wird.

Die Höhe des Vakuums jedes Halteelements kann gemäß einer weiteren beispielhaften Ausführungsform zwischen 450 mbar und 750 mbar, zwischen 500 mbar und 690 mbar, zwischen 550 mbar und 650 mbar und besonders bevorzugt zwischen 600 mbar und 620 mbar liegen.

Dabei kann der externe Vakuumgenerator eine Saugleistung zwischen 5 NL/min und 25 NL/min, zwischen 7 NL/min und 22 NL/min und besonders bevorzugt zwischen 10 NL/min und 15 NL/min aufweisen; wobei der Luftverbrauch bevorzugt zwischen 10 NL/min und 25 NL/min, zwischen 11,5 NL/min und 23 NL/min und insbesondere zwischen 15 NL/min und 20 NL/min liegt. Weiterhin kann der externe Vakuumgenerator einen Speisedruck von ca. 2 bar bis ca. 9 bar, von ca. 4 bar bis ca. 7 bar und bevorzugt ca. 5 bar aufweisen.

Gemäß einer weiteren beispielhaften Ausführungsform des erfindungsgemäßen Verfahrens kann die Arbeitsplatte im Wesentlichen parallel gegenüber der Oberfläche des flächigen Materials angeordnet werden.

Eine im Wesentliche parallele Anordnung der Arbeitsplatte gegenüber der Oberfläche des flächigen Materials ermöglicht eine präzisere und insbesondere homogenere Reparatur der Beschädigung durch das erfindungsgemäße Verfahren. Insbesondere wird damit garantiert, dass die Reparaturstelle keinen Vorsprung im Gegensatz zu der unbeschädigten Oberfläche aufweist.

Um die Herstellung des Abdrucks zu erleichtern, kann bevor Schritt b) erfolgt, d.h. vor dem Erstellen eines Abdrucks, gemäß einer weiteren beispielhaften Ausführungsform des erfindungsgemäßen Verfahrens, eine Befestigung des Dichtelements in einer in Bezug auf die Unterseite der Arbeitsplatte im Wesentlichen senkrechten Position erfolgen.

Mit der Befestigung des Dichtelements ist es möglich den Abdruck mittels des erfindungsgemäßen Werkzeuges zu erstellen. Die Verwendung von anderen Werkzeugen ist somit überflüssig, wodurch sowohl Werkzeugkosten als auch Aufwand gespart werden.

Gemäß einer weiteren beispielhaften Ausführungsform des erfindungsgemäßen Verfahrens kann die Herstellung des Abdrucks gemäß Schritt c) folgende Schritte umfassen: Einfüllen einer Abdruckmasse in den Abdruckbereich, welcher von dem Dichtelement wenigstens teilweise begrenzt ist; Aushärtung des Materials und Lösen der Arbeitsplatte von der Oberfläche des flächigen Materials.

Der Abdruck weist somit zumindest teilweise die Form des Abdruckbereichs auf. Insbesondere stimmt der Umfang des Abdruckbereichs, der durch das Dichtelement zumindest teilweise begrenzt werden kann, zumindest teilweise mit dem Umfang des Abdrucks überein. Eine Änderung der Position des Dichtelements führt daher zu einer Änderung der Form und/oder der Größe des Abdrucks.

Durch die Verwendung z.B. einer Mischerdüse wird die Abdruckmasse durch einen Schlauch in den Abdruckbereich eingefüllt. Falls das Dichtelement gemäß einer der oberen beschriebenen beispielhaften Ausführungsformen eine U-Form aufweist, kann die Abdruckmasse an der unteren Seite der U-Form eingeführt werden. Vorteilhaft dabei ist, dass bei der Einfüllung der Abdruckmasse die Luft nach oben, also in Richtung des oberen Endes des ʺU‴s entweichen kann und sich somit keine Luftblasen im Abdruck bilden.

Falls das Dichtelement zum Beispiel dicht gegenüber viskoser Flüssigkeiten ist, aber Luft durchlässt, kann die Form des Dichtelements jedoch auch eine geschlossene Form sein, wie zum Beispiel ein Kreis oder ein Rechteck, da die Luft aus den Dichtelement entweichen kann.

Die verwendete Abdruckmasse zur Herstellung eines Abdrucks kann gemäß weiteren beispielhaften Ausführungsformen aus einer Gruppe ausgewählt werden, welche Silikon, Gummi, Gipse, Gelmassen, Polydimethylsiloxane oder dergleichen umfasst.

Gemäß einer weiteren beispielhaften Ausführung des erfindungsgemäßen Verfahrens kann zwischen Schritt d) und Schritt e) folgender Schritt erfolgen: Einführen eines Füllrohrs, wie beispielweise eine Kanüle, zwischen dem Abdruck und dem Beschädigungsbereich.

Gemäß den oben beschriebenen Ausführungsformen wurde nach Schritt d) der Abdruck auf die Arbeitsplatte positioniert und die Arbeitsplatte über den Beschädigungsbereich angeordnet. Die Einführung eines Füllrohrs bzw. einer Kanüle zwischen dem Abdruck und dem Beschädigungsbereich ermöglicht ein exaktes Einfüllen einer Füllmasse in dem beschädigten Bereich. Dabei ist es wesentlich, dass die Spitze der Kanüle mit der Beschädigung übereinstimmt, so dass die Füllmasse im Wesentlichen nur in die Beschädigung eingefüllt wird.

Damit die Kanüle leichter zwischen den Abdruck und die Oberfläche eingeführt werden kann, ist es auch im Sinne dieser Erfindung, die Höhe des Vakuums von mindestens einem Halteelement bzw. Vakuumflachsauger zu verringern, so dass die Arbeitsplatte sich leicht von der Oberfläche des flächigen Materials löst und die Einführung des Füllrohrs bzw. der Kanüle erleichtert wird.

Nachdem das Füllrohr in die richtige Position angeordnet worden ist, d.h. mit der Spitze im Wesentlichen über dem Schaden und zwischen Abdruck und Oberfläche des zu reparierenden Schadens, kann die Höhe des Vakuums wieder erhöht werden, um eine stabile Befestigung sowohl von der Arbeitsplatte als auch von dem Füllrohr an der Oberfläche des flächigen Materials zu gewährleisten.

Somit kann gemäß einer weiteren beispielhaften Ausführungsform eine Füllmasse in die zu reparierende Oberfläche des flächigen Materials durch das Füllrohr eingefüllt werden. Dabei ist es vorteilhaft und im Sinne der Erfindung, dass das Material der Füllmasse aus einer Gruppe ausgewählt werden kann, welche Silikon, Gummi, Gipse, Gelmassen, methacrylische Kunstharze oder dergleichen umfasst.

Eine Verwendung des Werkzeugs gemäß einer der oberen beschriebenen beispielhaften Ausführungsformen zur Reparatur von flächigen Blechen, insbesondere von Strukturblechen mit einer sich wiederholenden Strukturform, kann somit gewährleistet werden.

Weitere Aspekte der Erfindung ergeben sich aus der nachfolgenden detaillierten Beschreibung einer möglichen Ausführungsform der Erfindung in Verbindung mit der Zeichnung. Es wird darauf hingewiesen, dass durch dieses Beispiel Abwandlungen beziehungsweise Ergänzungen, wie sie sich für den Fachmann unmittelbar ergeben, mit umfasst sind. Darüber hinaus stellen die bevorzugten Ausführungsbeispiele keine Beschränkung der Erfindung dar, so dass auch Abwandlungen und Ergänzungen im Umfang der vorliegenden Erfindung liegen.
**Figur 1** zeigt die Unterseite einer schematischen Darstellung einer Ausführungsform des erfindungsgemäßen Werkezeugs;
**Figur 2** **zeigt** ein Flussdiagramm einer ersten Ausführungsform des erfindungsgemäßen Verfahrens;
**Figur 2a** zeigt ein Flussdiagramm einiger erfindungsgemäßen Zwischenschritte des Verfahrens aus Figur 2;
**Figur 2b** zeigt ein weiteres Flussdiagramm eines erfindungsgemäßen Zwischenschrittes des Verfahrens aus Figur 2;
**Figuren 3a bis 3f** zeigen mögliche Schritte einer beispielhaften Ausführungsform des erfindungsgemäßen Verfahrens durch Verwendung einer beispielhaften Ausführungsform des erfindungsgemäßen Werkzeugs; wobei:

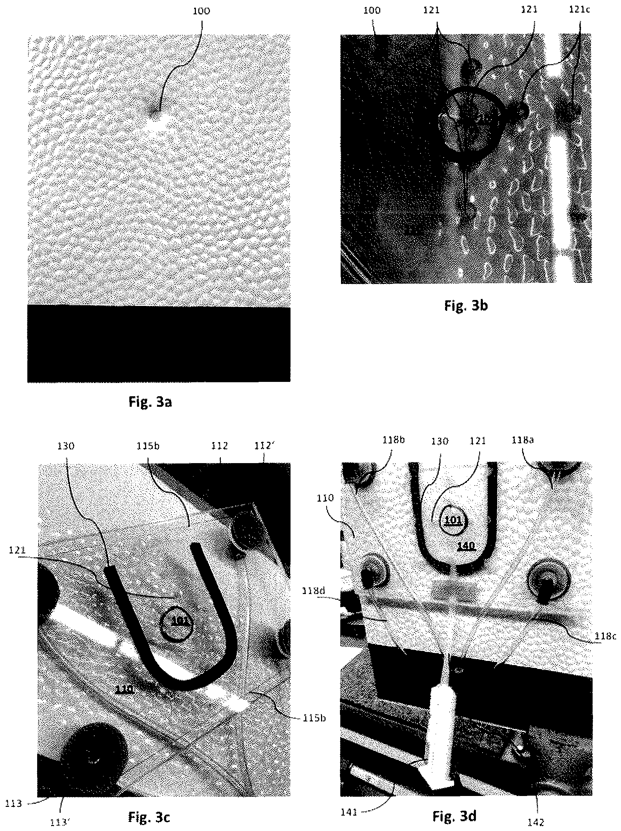

**Figur 3a** eine beispielhafte Beschädigung an einer strukturierten Oberfläche zeigt;
**Figur 3b** eine Teilansicht der Oberseite der erfindungsgemäßen Arbeitsplatte mit einem markierten Beschädigungsbereich der Beschädigung aus Figur 3a sowie einige Positionierungshilfsmittel zeigt;
**Figur 3c** eine Unteransicht der Arbeitsplatte aus der Figur 3b mit einem Dichtelement zeigt;
**Figur 3d** eine Oberansicht der Arbeitsplatte aus den vorherigen Figuren zeigt, die gegen eine unbeschädigte Oberfläche angeordnet ist;

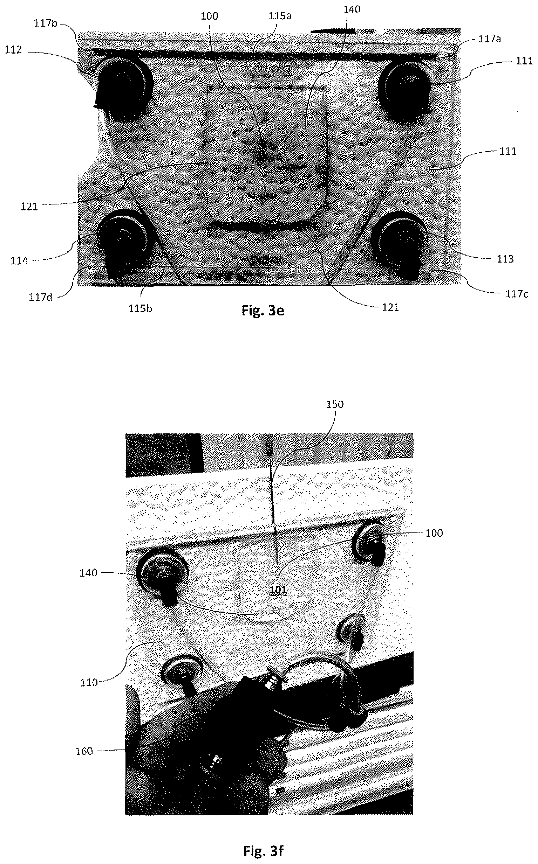

**Figur 3e** eine Oberansicht der Arbeitsplatte aus den vorherigen Figuren zeigt, wobei die Arbeitsplatte zusammen mit einem Abdruck an der beschädigten Oberfläche angeordnet ist;
**Figur 3f** eine erfindungsgemäße Anordnung der Arbeitsplatte samt Abdruck und Kanüle an die zu reparierende Oberfläche zeigt;

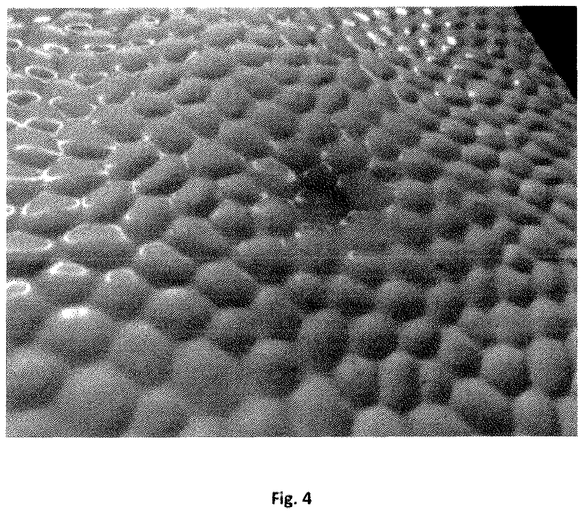

**Figur 4** zeigt ein Foto einer reparierten Oberfläche, die mittels des erfindungsgemäßen Verfahrens und Werkzeugs repariert worden ist.

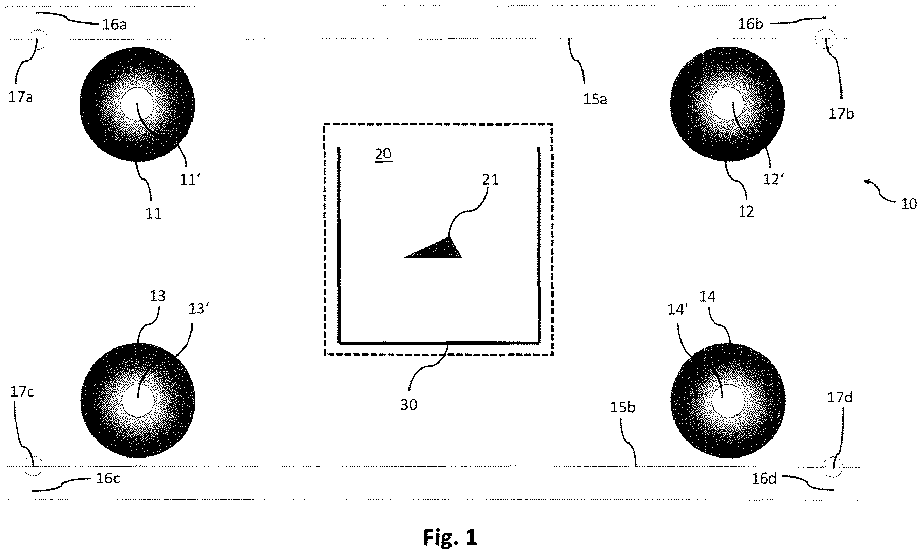

Das erfindungsgemäße Werkzeug wie aus Figur 1 ersichtlich, umfasst eine Arbeitsplatte 10, Halteelemente 11, 12, 13, 14, einen Abdruckbereich 20 und wenigstens ein Positionierungshilfsmittel 21.

In dieser beispielhaften Ausführungsform hat die Arbeitsplatte 10 eine rechteckige Form, jedoch kann sie jede beliebige Form aufweisen.

Die Halteelemente 11, 12, 13, 14 sind im Wesentlichen an den vier Ecken der Arbeitsplatte 10 angeordnet und als Vakuumflachsauger schematisch dargestellt. An den Öffnungen 11', 12', 13', 14' wird auf der Oberseite der Arbeitsplatte 10 jeweils eine Rohrverbindung angeordnet (nicht dargestellt), welche mit einem Vakuumgenerator angeschlossen ist, um ein Vakuum herzustellen,

Die beispielhafte Arbeitsplatte 10 aus Figur 1 weist weiterhin zwei horizontale Maßskalen 15a, 15b und vier vertikale, die horizontalen Maßskalen senkrecht kreuzende Segmente 16a, 16b, 16c, 16d auf. Weiterhin sind vier Durchbohrungen 17a, 17b, 17c, 17d vorgesehen, welche jeweils an den vier Kreuzungen der vertikalen Segmente 16a, 16b, 16c, 16d und der horizontalen Maßskalen 15a, 15b angeordnet sind.

Die Durchbohrungen 17a, 17b, 17c, 17d verlaufen durch die Arbeitsplatte 10 hindurch und bilden Öffnungen, die dazu dienen, Markierungen auf die zu reparierende Oberfläche aufzutragen. Diese Markierungen helfen der genaueren Positionierung und reproduzierbaren Positionierung der Arbeitsplatte 10 auf die Oberfläche des flächigen Materials.

Im Wesentlichen zentral angeordnet in Bezug auf die Arbeitsplatte 10 befindet sich der Abdruckbereich 20, der in Figur 1 ersichtlich ist.

Wie aus der Figur 1 ersichtlich, ist der Abdruckbereich 20 wenigstens an Abschnitten seines Umfangs durch ein Dichtelement 30 begrenzt. Dieser weist in der beispielhaften Ausführungsform der Figur 1 eine U-Form auf und besteht aus Moosgummi.

Im Wesentlichen mittig sowohl in Bezug auf den Abdruckbereich 20 als auch auf den Dichtelement 30 angeordnet, befindet sich in der vorliegenden beispielhaften Ausführungsform ein Positionierungshilfsmittel 21.

Das Positionierungshilfsmittel 21 ist in der vorliegenden beispielhaften Ausführungsform eine Vertiefung in der Arbeitsplatte 10 und weist eine dreieckige Form mit drei ungleichlangen Kanten auf. Das Positionierungshilfsmittel weist somit eine unsymmetrische Form auf; ein Abdruck der im Abdruckbereich geformt wird und vom Dichtelement begrenzt wird, weist somit einen zu der dreieckigen Vertiefung korrespondierenden dreieckigen Vorsprung mit denselben ungleichlangen Kanten auf. Eine reproduzierbare Positionierung des Abdrucks ist somit stets möglich.

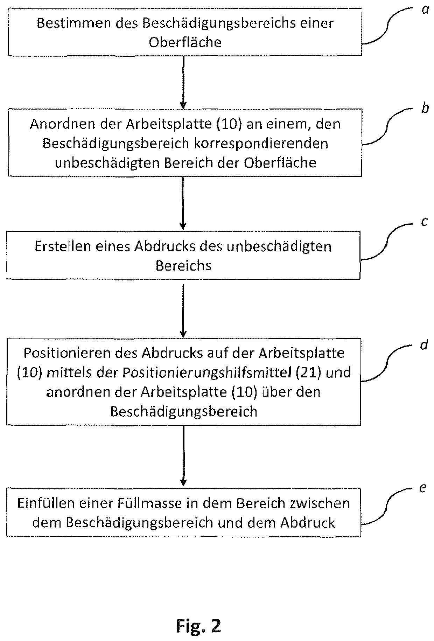

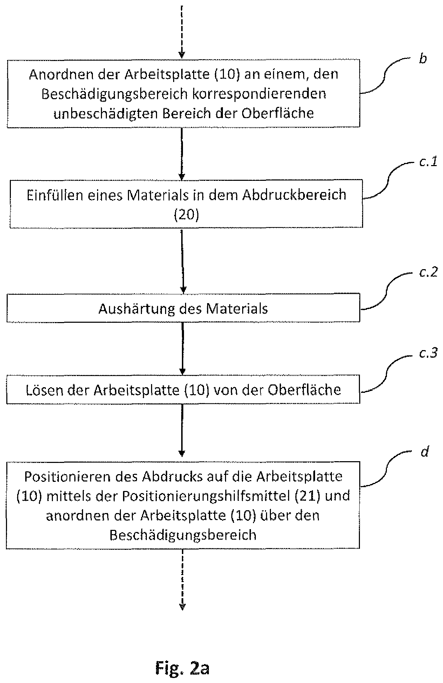

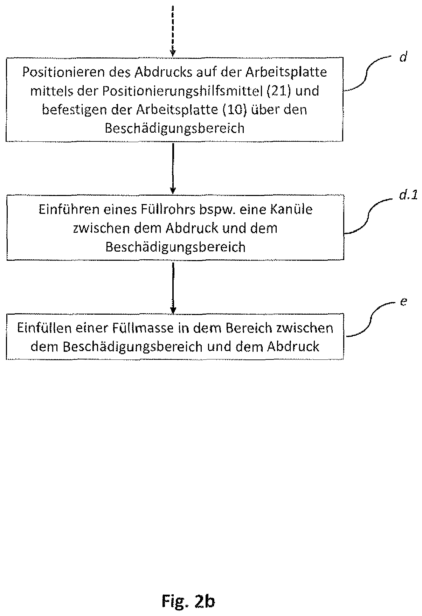

Figur 2 beschreibt eine beispielhafte Ausführungsform des erfindungsgemäßen Verfahrens umfassend fünf Schritte.

Im ersten Schritt *a* wird ein Beschädigungsbereich auf der zu reparierenden Oberfläche bestimmt, so dass der Beschädigungsbereich die Beschädigung vollständig enthält. Falls mehrere gleiche Werkzeuge mit verschiedenen Größen zur Verfügung stehen, kann nach dem Schritt a beispielsweise entschieden werden, welche Werkzeuggröße passend für die Beschädigung ist.

Im Schritt b wird die Arbeitsplatte an einem den Beschädigungsbereich korrespondierenden unbeschädigten Bereich der Oberfläche angeordnet. Für ein Blech ohne Struktur heißt das, dass die Arbeitsplatte an einem beliebigen unbeschädigten Bereich der Oberfläche angeordnet werden kann. Falls jedoch das Verfahren auf einem Strukturblech erfolgt, muss der zum Beschädigungsbereich korrespondierende unbeschädigte Bereich erst ermittelt werden. Um diesen zu ermitteln, werden entweder das bloße Auge oder die Maßskalen verwendet, falls diese auf dem Werkzeug vorhanden sind.

Der Abdruck wird in Schritt c erstellt, indem eine Abdruckmasse zwischen die Unterseite der Arbeitsplatte und der unbeschädigten Oberfläche und insbesondere in den Abdruckbereich eingefüllt wird. Da die Arbeitsplatte im Schritt b gegen die Oberfläche angeordnet und gepresst wird, weist der Abdruck an seiner der zu reparierenden Oberfläche zugewandten Seite eine gleiche Struktur wie die der Oberfläche, gegen welche der Abdruck gepresst wird, auf. Falls die zu reparierende Oberfläche eine Struktur aufweist, wird der Abdruck demzufolge auch an einer seiner Seiten das gleiche Muster aufweisen.

Der durch das erfindungsgemäße Reparaturverfahren hergestellte Abdruck weist entsprechend des Positionierungshilfsmittels eine Negativform des mindestens einen Positionierungshilfsmittels auf seiner Oberfläche auf.

Mittels des an der Arbeitsplatte angeordneten Positionierungshilfsmittels und der entsprechenden Negativform auf dem Abdruck, ist es im Schritt d der beispielhaften Ausführungsform des erfindungsgemäßen Verfahrens nach Figur 2 möglich, den Abdruck wieder replizierbar auf die Arbeitsplatte zu positionieren. Weiterhin kann nun die Arbeitsplatte samt Abdruck über den Beschädigungsbereich angeordnet werden, so dass der Muster des Abdrucks (falls vorhanden) in Übereinstimmung mit dem Muster des beschädigten Bereichs angeordnet ist.

Im letzten Schritt e wird eine Füllmasse in dem Bereich zwischen dem Beschädigungsbereich, insbesondere der Beschädigung und dem Abdruck eingefüllt. Durch das Pressen der Arbeitsplatte gegen die Oberfläche mittels des Vakuums und, dementsprechend, das Pressen des Abdrucks gegen die in dem Beschädigungsbereich eingefüllte Füllmasse, erhält die Füllmasse beim Aushärten die gleiche Struktur wie der Abdruck. Da die Struktur des Abdrucks mit der Struktur des Beschädigungsbereich vor der Beschädigung übereinstimmt, ist nach dem erfindungsgemäßen Verfahren das Muster an der Reparaturstelle wieder hergestellt und das Reparaturverfahren kann mit bloßemn Auge nicht erkannt werden.

Die Figur 2a zeigt welche Schritte der Schritt c aus Figur 2 umfasst, nämlich Schritte *c*.*1* bis *c*.*3*.

In Schritt *b* wird, wie oben in Figur 2 im Detail beschrieben, die Arbeitsplatte 10 an einem den Beschädigungsbereich korrespondierenden unbeschädigten Bereich der Oberfläche angeordnet.

In Schritt *c*.*1* wird ein Material zur Abdruckbildung, d.h. eine Abdruckmasse in den Abdruckbereich der Arbeitsplatte eingefüllt. Dabei wird, falls die Arbeitsplatte das Dichtelement aufweist, die Abdruckmasse von der unteren Seite des Dichtelements eingefüllt, so dass die Luft im Abdruckbereich nach oben entweichen kann.

Im Schritt *c*.*2* wird auf die Aushärtung der Abdruckmasse gewartet. Dabei bleibt die Arbeitsplatte fest an die Oberfläche angeordnet und eine Verschiebung der Arbeitsplatte oder der Oberfläche soll vermieden werden.

Im Schritt c.3 wird die Arbeitsplatte von der Oberfläche gelöst. Gleichzeitig kann der Abdruck von der Arbeitsplatte gelöst werden. Da bei der Aushärtung des Abdrucks in Schritt c.2 der Abdruck nicht immer homogen ist, kann nach Schritt c.3 überschüssiges Material vom Abdruck zum Beispiel mit einem Messer entfernt werden.

Nach dem Schritt *c*, bzw. *c*.*1* bis c.3 folgt Schritt d wie schon in Figur 2 beschrieben.

Figur 2b zeigt hingegen einen Zwischenschritt d. 1 zwischen den Schritten d und e aus Figur 2.

Im Schritt d aus Figur 2b bzw. Figur 2 wird der Abdruck mittels der Positionierungshilfsmittel an die Arbeitsplatte positioniert und die Arbeitsplatte über dem Beschädigungsbereich befestigt.

Im Schritt *d*.*1* wird ein Füllrohr, das beispielsweise eine Kanüle sein kann, zwischen dem Abdruck und dem Beschädigungsbereich eingeführt. Durch die Kanüle wird, dem Schritt e entsprechend, die Füllmasse zur Reparatur des Schadens eingefüllt.

Um das Einführen des Füllrohrs zu erleichtern, kann das Vakuum an einzelnen Halteelementen leicht verringert werden, so dass die Kanüle leicht einführbar ist. Beim Einfüllen der Füllmasse kann die überschüssige Luft an den Seiten des Füllrohrs entweichen.

Die Figuren 3a bis 3f zeigen im Detail verschiedene Schritte einer beispielhaften Ausführungsform des erfindungsgemäßen Verfahrens mittels einer beispielhaften Ausführungsform des erfindungsgemäßen Werkzeugs.

In Figur 3a ist ein strukturiertes Blech zu sehen, zum Beispiel eines Wohnmobils, welches eine Beschädigung 100, beispielsweise eine Delle, aufweist. In dem vorliegenden Beispiel ist die Delle 100 zu klein, dass sich ein Austausch der kompletten Oberfläche lohnt, weswegen lokal die Beschädigung, also die Delle, repariert werden muss. Da die Oberfläche eine Struktur aufweist, ist es besonders vorteilhaft, wenn die Struktur an der Beschädigung nach dem Reparaturverfahren wiederhergestellt wird.

Sobald die Beschädigung identifiziert wird, kann die Arbeitsplatte 110 gemäß Figur 3b auf die beschädigte Oberfläche befestigt werden und der Beschädigungsbereich 101, zum Beispie! mittels eines Markers, auf der Arbeitsplatte 110 markiert werden. Dabei wird üblicherweise die Arbeitsplatte 110 auf der Beschädigung so angeordnet, dass die Beschädigung 100 mittig in Bezug auf die Arbeitsplatte positioniert ist. Wichtig ist dabei insbesondere, dass der Beschädigungsbereich 101 mindestens ein Positionierungshilfsmittel 121 enthält oder sich zumindest in unmittelbarer Nähe eines Positionierungshilfsmittels 121 befindet. In Figur 3b sind mindestens acht Positionierungshilfsmittel 121 sichtbar: einige davon im Beschädigungsbereich 101 und einige außerhalb des Beschädigungsbereichs 101. Gemäß diesem vorliegenden Beispiel sind die Positionierungshilfsmittel 121 einfach Vertiefungen und weisen keine unsymmetrische Form auf.

Figur 3c zeigt eine Unteransicht der erfindungsgemäßen Arbeitsplatte 110 auf, unter anderem mit angeordneten Halteelementen, angeordneten Dichtelement 130 und zwei horizontalen Maßskalen 115a, 115b.

Wie aus der Figur 3c ersichtlich, sind vier Halteelemente in Wesentlichen an den Ecken der Arbeitsplatte 110 angeordnet, wobei nur das von der Unterseite der Arbeitsplatte aus gesehene obere rechte Haltelement 112 und untere linke Halteelement 113 in der Figur 3c eindeutig sichtbar sind. Die weiteren zwei Halteelemente sind nur teilweise sichtbar und sind ohne Bezugszeichen versehen.

Die Halteelemente sind gemäß dieser beispielhaften Ausführungsform Vakuumflachsauger, die jeweils eine Öffnung 112', 113'aufweisen an der jeweils ein Vakuumschlauch 118a, 118b angeschlossen ist. Die Vakuumschläuche 118a, 118b sind jeweils an einem Vakuumgenerator angeschlossen (nicht gezeigt) und es ist möglich, an jedem Vakuumflachsauger, unabhängig voneinander, die Vakuumhöhe einzustellen. Die nur teilweise gezeigten Halteelemente sind in dieser beispielhaften Ausführungsform auch Vakuumflachsauger die sowohl jeweils eine Öffnung aufweisen als auch mittels Vakuumschläuchen an den externen Vakuumgenerator angeschlossen sind.

Wie in Figur 3c ersichtlich, ist das Dichtelement 130, in Bezug auf die Arbeitsplatte 110 mittig, in einer U-Form um den Beschädigungsbereich 101 herum angeordnet. Das Dichtelement 130 wurde mittels eines Klebestreifens (nicht gezeigt) an die Arbeitsplatte 100 befestigt und insbesondere zumindest teilweise an den Umfang des Abdruckbereichs (nicht gezeigt) befestigt. Das Dichtelement 130 besteht aus einem Material das gegenüber viskose Flüssigkeit dicht ist, jedoch luftdurchlässig ist; in diesem Beispiel Moosgummi.

Die Positionierungshilfsmittel 121 aus Figur 3b sind sowohl innerhalb des nicht gezeigten Abdruckbereichs als auch im Inneren der U-Form des Dichtelements 130 angeordnet.

Figur 3d zeigt die an einem der Beschädigung 100 korrespondierenden unbeschädigten Bereich angeordnete Arbeitsplatte 110. In diesem Schritt wird ein Abdruck 140 eines dem Beschädigungsbereich 101 korrespondierenden unbeschädigten Bereich erstellt.

Wie aus der Figur 3d ersichtlich, kann erfindungsgemäß an dem Dichtelement 130 ein an einem Abdruckmassenspender 141 verbundener Abdruckmasseschlauch 142 angeordnet sein, so dass die Abdruckmasse von unten in den vom Dichtelement 130 begrenzten Bereich eingeführt wird. Da die Abdruckmasse viskös ist, wird durch das Dichtelement 130 ein Austreten der Abdruckmasse aus dem Bereich verhindert, Der erstellte Abdruck 140 weist ein Volumen auf, das unter anderem durch die Unterseite der Arbeitsplatte 110, das Dichtelement 130, die Positionierungshilfsmittel 121 und die unbeschädigte Oberfläche, bestimmt wird.

Der Abdruck 140 entsteht durch die Aushärtung der Abdruckmasse. Der Abdruck 140 weist demnach auf einer Seite die Oberflächenstruktur der zu reparierenden Oberfläche auf und auf der anderen Seite die den Vertiefungen (also den Positionierungshilfsmitteln 121) korrespondierenden Vorsprünge.

Die Höhe des Vakuums der Vakuumflachsauger ist in diesem Schritt für alle Vakuumflachsauger jeweils gleich zwischen 500 mbar und 690 mbar, so dass die Arbeitsplatte 110 uniform gegen die Oberfläche gepresst wird. Dabei muss die Höhe des Vakuums groß genug sein, um ein Verrutschen der Arbeitsplatte 110 zu verhindern. Verrutscht die Arbeitsplatte zufällig muss, nachdem die Arbeitsplatte 110 wieder korrekt positioniert worden ist, das Verfahren des Einfüllens der Abdruckmasse wiederholt werden.

Die adhäsive Seite des Dichtelements ist von dieser Ansicht aus klar sichtbar.

Figur 3e zeigt die an den Beschädigungsbereich 101 befestigte Arbeitsplatte 110 aus den vorherigen Figuren. Der Abdruck 140, der wie im Schritt der Figur 3d dargestellt, erstellt worden ist, wird entsprechend der Positionierungshilfsmitteln 121 an die Arbeitsplatte 110 angebracht. Weiterhin wird die Arbeitsplatte 110 und somit auch der Abdruck an den Beschädigungsbereich 101 angeordnet, so dass die Struktur des Abdrucks 140 mit der Struktur des Beschädigungsbereichs 101 übereinstimmt. Die genaue Positionierung der Arbeitsplatte 110 wird durch Zuhilfenahme der Maßskalen 115a, 115b und der vorgenommenen Markierungen, z.B. durch die Durchbohrungen 117a bis 117b, vorgenommen. Die Vakuumhöhe der Vakuumflachsauger 111, 112, 113, 114 ist in diesem Schritt der beispielhaften Ausführungsform an allen Vakuumflachsaugern 111, 112, 113, 114 gleich, sodass der Abdruck 140 homogen gegen die Beschädigung gepresst wird.

Im Schritt, der durch die Figur 3f gezeigt wird, wird die Vakuumhöhe der Vakuumflachsauger mittels eines Ventils 160 leicht verringert, sodass es möglich ist, ein Füllrohr 150 zwischen Oberfläche und Abdruck 140 einzuführen. Die Spitze des Füllrohrs wird genau über die Beschädigung 100 angeordnet. Sobald das Füllrohr 150 eingeführt worden ist, wird das Vakuum auf allen Vakuumflachsaugern 111, 112, 113, 114 wieder gleichgesetzt, so dass die Arbeitsplatte 110 und insbesondere der Abdruck 140 homogen gegen die zu reparierende Stelle gedrückt wird.

Durch das Füllrohr 150 wird eine Füllmasse in die Beschädigung 100 eingeführt, so dass diese repariert wird. Durch das Pressen des Abdrucks 140 gegen die Füllmasse erhält diese die Struktur des Abdrucks 140 und somit die Struktur des zu dem Beschädigungsbereich 101 korrespondierenden unbeschädigten Bereichs,

Die Luft, die durch das Einfüllen der Füllmasse entweichen muss, kann seitlich des Füllrohrs entweichen. Somit entstehen keine Luftblasen in der Reparaturstelle.

Sobald die Füllmasse ausgetrocknet ist, kann die Arbeitsplatte 110 entfernt werden und das Reparaturverfahren ist abgeschlossen.

Gegebenenfalls können nach dem erfindungsgemäßen Verfahren einzelne Änderungen an dem Reparaturbereich stattfinden, falls diese erforderlich sind. Eine neue Lackierung der gesamten Oberfläche würde die Optik des reparierten Beschädigungsbereichs noch weiter verbessern.

Figur 4 zeigt eine gemäß dem erfindungsgemäßen Verfahren und durch Verwendung des erfindungsgemäßen Werkzeuges reparierte Oberfläche. Die Struktur wurde wiederhergestellt und ein Erkennen der Schadstelle mit bloßem Auge ist im Wesentlichen nicht mehr möglich.

| | | | |
|---|---|---|---|
| **Bezugszeichen** | | 110 | Arbeitsplatte |
| 10 | Arbeitsplatte | 111-114 | Halteelemente |
| 11-14 | Halteelemente | 115 a, b | Horizontale Maßskala |
| 11'-14' | Öffnungen | 117a-d | Durchbohrungen |
| 15a, 15b | Horizontale Maßskala | 118a-d | Vakuumschläuche |
| 16a-16d | Vertikale Segmente der | 121 | Positionierungshilfsmittel |
| | Maßskala | 130 | Dichtelement |
| 17a-17d | Durchbohrungen | 140 | Abdruck |
| 20 | Abdruckbereich | 141 | Abdruckmassenspender |
| 30 | Dichtelement | 142 | Abdruckmasseschlauch |
| 21 | Positionierungshilfsmittel | 150 | Füllrohr |
| 100 | Schadensstelle | 160 | Vakuumregler |
| 101 | Beschädigungsbereich | | |

## Patentansprüche

1. Werkzeug zur Reparatur von flächigen Materialien wie beispielweise Blech, umfassend:
eine Arbeitsplatte (10), Halteelemente (11, 12, 13, 14), einen Abdruckbereich (20) und wenigstens ein Positionierungshilfsmittel (21);
wobei die Arbeitsplatte (10) zumindest teilweise durchsichtig ist und eine Oberseite und eine Unterseite aufweist, wobei die Unterseite mit Bezug auf eine Oberfläche des flächigen Materials anordbar ist; und
die Halteelemente (11, 12, 13, 14) insbesondere Vakuumhalteelemente sind, welche an der Unterseite der Arbeitsplatte (10) so angeordnet sind, dass die Arbeitsplatte (10) im Wesentlichen parallel an der Oberfläche des flächigen Materials lösbar verbindbar ist,
**dadurch gekennzeichnet, dass**
der Abdruckbereich (20) an der Unterseite der Arbeitsplatte (10) angeordnet ist und wenigstens an Abschnitten seines Umfangs mit einem lösbaren Dichtelement (30) begrenzt ist, wobei der Abdruckbereich (20) ein Volumen, welches durch wenigstens die Unterseite der Arbeitsplatte (10), das Dichtelement (30) und bei Montage des Werkzeugs durch die Oberfläche des anordbaren flächigen Material bestimmt; und
das mindestens ein Positionierungshilfsmittel (21) im Abdruckbereich (20) angeordnet ist und zur reproduzierbaren Positionierung eines in dem Abdruckbereich (20) geformten Abdrucks dient.

2. Werkzeug zur Reparatur von flächigen Materialien gemäß Anspruch 1, **dadurch gekennzeichnet, dass** die Arbeitsplatte (10) ferner mindestens zwei senkrecht zueinander positionierte Maßskalen (15, 16) aufweist.

3. Werkzeug zur Reparatur von flächigen Materialien gemäß einem der vorherigen Ansprüche **dadurch gekennzeichnet, dass** das Material der Arbeitsplatte (10) aus einer Gruppe ausgewählt wird, welche Kunststoffe, Glas, Plastik, Plexiglas oder dergleichen umfasst.

4. Werkzeug zur Reparatur von flächigen Materialien gemäß einem der vorherigen Ansprüche, **dadurch gekennzeichnet, dass** die Halteelemente (11, 12, 13, 14) lösbar an der Unterseite der Arbeitsplatte (10) angeordnet sind.

5. Werkzeug zur Reparatur von flächigen Materialien gemäß einem der vorherigen Ansprüche, **dadurch gekennzeichnet, dass** die Halteelemente (11, 12, 13 ,14) Vakuumflachsauger sind, welche insbesondere an einem Vakuumgenerator anschließbar sind.

6. Werkzeug zur Reparatur von flächigen Materialien gemäß einem der vorherigen Ansprüche, **dadurch gekennzeichnet, dass** das Dichtelement (30) aus einer Gruppe ausgewählt wird, welche Moosgummi, Kunststoff wie z.B. Silikon, Gummi, Polyurethane, PVC oder dergleichen umfasst.

7. Werkzeug zur Reparatur von flächigen Materialien gemäß einem der vorherigen Ansprüche, **dadurch gekennzeichnet, dass** das Verhältnis zwischen der Höhe des Dichtelements (30) und dem Vorsprung der Halteelemente (11, 12, 13, 14) bzw. Vakuumflachsauger im entspannten Zustand, bei 1 zu 1/4, bevorzugt 1 zu 1/2, besonders bevorzugt 1 zu 3/4 und insbesondere bei 1 zu 1, liegt.

8. Werkzeug zur Reparatur von flächigen Materialien gemäß einem der vorherigen Ansprüche, **dadurch gekennzeichnet, dass** das vom Abdruckbereich (20) bestimmte Volumen zwischen ca. 35 cm³ und ca. 250 cm³, bevorzugt zwischen ca. 72 cm³ und ca. 180 cm³, besonders bevorzugt zwischen ca. 100 cm³ und ca. 150 cm³ liegt, und insbesondere ca. 120 cm³ beträgt.

9. Werkzeug zur Reparatur von flächigen Materialien gemäß einem der vorherigen Ansprüche, **dadurch gekennzeichnet, dass** das mindestens ein Positionierungshilfsmittel (21) eine Vertiefung oder ein Vorsprung in der Arbeitsplatte (10) ist.

10. Werkzeug zur Reparatur von flächigen Materialien gemäß dem vorherigen Anspruch, **dadurch gekennzeichnet, dass** die Arbeitsplatte (10) mindestens 3 Positionierungshilfsmittel (21, 22, 23) aufweist.

11. Verwendung des Werkzeugs gemäß einem der vorstehenden Ansprüche 1 bis 10 zur Durchführung eines Verfahren zur Reparatur von flächigen Materialien mit den Schritten:
a) Bestimmen eines Beschädigungsbereichs einer Oberfläche eines flächigen Materials;
b) Anordnen der Arbeitsplatte (10) an einem, den Beschädigungsbereich korrespondierenden unbeschädigten Bereich der Oberfläche des flächigen Materials;
c) Erstellen eines Abdrucks des unbeschädigten Bereichs, welches eine gleiche Oberflächenstruktur wie der Beschädigungsbereich der zu reparierenden Oberfläche aufweist;
d) Positionieren des Abdrucks auf der Arbeitsplatte (10) mittels der Positionierungshilfsmittel (21) und anordnen der Arbeitsplatte (10) über den Beschädigungsbereich;
e) Einfüllen einer Füllmasse in dem Bereich zwischen dem Beschädigungsbereich und dem Abdruck.

12. Verwendung des Werkzeugs zur Durchführung eines Verfahrens gemäß Anspruch 11, **dadurch gekennzeichnet, dass** die Herstellung des Abdrucks gemäß Schritt c), folgende Schritte umfasst:
c.1. Einfüllen einer Abdruckmasse in den Abdruckbereich (20), welcher von dem Dichtelement (30) wenigstens teilweise begrenzt ist;
c.2. Aushärtung des Materials;
c.3. Lösen der Arbeitsplatte (10) von der Oberfläche des flächigen Materials.

13. Verwendung des Werkzeugs zur Durchführung eines Verfahrens gemäß einem der Ansprüche 11 oder 12, **dadurch gekennzeichnet, dass** zwischen Schritt d) und Schritt e), folgender Schritt erfolgt:
d.1. Einführen eines Füllrohrs, wie beispielweise eine Kanüle zwischen dem Abdruck und dem Beschädigungsbereich;

14. Verwendung des Werkzeugs zur Durchführung eines Verfahrens gemäß einem der Ansprüche 11bis 13, **dadurch gekennzeichnet, dass** die Abdruckmasse zur Herstellung eines Abdrucks aus einer Gruppe ausgewählt ist, welche Silikon, Gummi, Gipse, Gelmassen, Polydimethylsiloxane oder dergleichen umfasst und /oder das Material der Füllmasse aus einer Gruppe ausgewählt ist, welche Silikon, Gummi, Gipse, Gelmassen, methacrylische Kunstharze oder dergleichen umfasst.

15. Verwendung des Werkzeugs nach einen der Ansprüche 1 bis 10 zur Reparatur von flächigen Blechen, insbesondere von Strukturblechen mit einer sich wiederholenden Strukturform.

## Claims

1. Tool for repairing planar materials such as sheet metal, comprising:
a worktop (10), holding elements (11, 12, 13, 14), an impression region (20) and at least one positioning aid (21);
the worktop (10) being at least partially transparent and having an upper face and a lower face, it being possible to arrange the lower face with respect to a surface of the planar material; and
the holding elements (11, 12, 13, 14) being in particular vacuum holding elements which are arranged on the lower face of the worktop (10) in such a way that the worktop (10) can be detachably connected substantially in parallel with the surface of the planar material,
**characterised in that**
the impression region (20) is arranged on the lower face of the worktop (10) and is delimited at least on portions of its periphery by a detachable sealing element (30), the impression region (20) having a volume which is determined by at least the lower face of the worktop (10), the sealing element (30) and, when the tool is assembled, by the surface of the arrangeable planar material; and
the at least one positioning aid (21) is arranged in the impression region (20) and is used for reproducibly positioning an impression formed in the impression region (20).

2. Tool for repairing planar materials according to claim 1, **characterised in that** the worktop (10) further comprises at least two scales (15, 16) which are positioned perpendicularly to one another.

3. Tool for repairing planar materials according to either of the preceding claims, **characterised in that** the material of the worktop (10) is selected from a group which comprises synthetic materials, glass, plastics material, Plexiglas or the like.

4. Tool for repairing planar materials according to any one of the preceding claims, **characterised in that** the holding elements (11, 12, 13, 14) are detachably arranged on the lower face of the worktop (10).

5. Tool for repairing planar materials according to any one of the preceding claims, **characterised in that** the holding elements (11, 12, 13, 14) are vacuum flat suction cups which can be connected in particular to a vacuum generator.

6. Tool for repairing planar materials according to any one of the preceding claims, **characterised in that** the sealing element (30) is selected from a group which comprises microcellular rubber, synthetic material such as silicone, rubber, polyurethane, PVC or the like.

7. Tool for repairing planar materials according to any one of the preceding claims, **characterised in that** the ratio between the height of the sealing element (30) and the projection of the holding elements (11, 12, 13, 14) or vacuum flat suction cups when relaxed is 1 to 1/4, preferably 1 to 1/2, particularly preferably 1 to 3/4 and in particular 1 to 1.

8. Tool for repairing planar materials according to any one of the preceding claims, **characterised in that** the volume determined by the impression region (20) is between approx. 35 cm³ and approx. 250 cm³, preferably between approx. 72 cm³ and approx. 180 cm³, particularly preferably between approx. 100 cm³ and approx. 150 cm³, and in particular approx. 120 cm³.

9. Tool for repairing planar materials according to any one of the preceding claims, **characterised in that** the at least one positioning aid (21) is a recess or a projection in the worktop (10).

10. Tool for repairing planar materials according to the preceding claim, **characterised in that** the worktop (10) has at least 3 positioning aids (21, 22, 23).

11. Use of the tool according to any one of the preceding claims 1 to 10 for carrying out a method for repairing planar materials comprising the steps of:
a) determining a damaged region of a surface of a planar material;
b) arranging the worktop (10) on an undamaged region of the surface of the planar material corresponding to the damaged region;
c) creating an impression of the undamaged region which has the same surface structure as the damaged region of the surface to be repaired;
d) positioning the impression on the worktop (10) using the positioning aids (21) and arranging the worktop (10) over the damaged region;
e) filling a filling compound in the region between the damaged region and the impression.

12. Use of the tool for carrying out a method according to claim 11, **characterised in that** producing the impression according to step c) comprises the following steps:
c.1. filling an impression compound in the impression region (20), which is at least in part delimited by the sealing element (30);
c.2. curing the material;
c.3. detaching the worktop (10) from the surface of the planar material.

13. Use of the tool for carrying out a method according to either claim 11 or claim 12, **characterised in that** the following step takes place between step d) and step e):
d.1. inserting a filling tube, such as a cannula, between the impression and the damaged region.

14. Use of the tool for carrying out a method according to any one of claims 11 to 13, **characterised in that** the impression compound for producing an impression is selected from a group which comprises silicone, rubber, plaster, gel compounds, polydimethylsiloxane or the like and/or the material of the filling compound is selected from a group which comprises silicone, rubber, plaster, gel compounds, methacrylic synthetic resins or the like.

15. Use of the tool according to any one of claims 1 to 10 for repairing planar sheet metal, in particular structured sheet metal having a structural shape which is repeated.

## Revendications

1. Outil pour réparer des matériaux plats tels que, par exemple, de la tôle comprenant :
- une plaque de travail (10), des éléments de maintien (11, 12, 13, 14), une zone d'empreinte (20) et au moins un élément d'aide au positionnement (21),
- la plaque de travail (10) étant au moins partiellement transparente et ayant un côté supérieur et un côté inférieur, le côté inférieur pouvant être disposé par rapport à la surface supérieure du matériau plat, et
- les éléments de maintien (11, 12, 13, 14) sont notamment des éléments de maintien sous vide prévus sur le côté inférieur de la plaque de travail (10) de façon que la plaque de travail (10) puisse être reliée de manière amovible pratiquement parallèlement à la surface supérieure du matériau plat,
**caractérisé en ce que**
la zone d'empreinte (20) est sur le côté inférieur de la plaque de travail (10), et
au moins à des segments de sa périphérie elle est délimitée par un élément d'étanchéité (30) amovible, la zone d'empreinte (20) ayant un volume délimité par au moins le côté inférieur de la plaque de travail (10), l'élément d'étanchéité (30) et, au montage de l'outil, par la surface supérieure du matériau plat, installé, et
- au moins un élément d'aide au positionnement (21) est prévue dans la zone d'empreinte (20) et sert au positionnement reproductible d'une empreinte formée dans la zone d'empreinte (20).

2. Outil pour réparer des matériaux plats selon la revendication 1, **caractérisé en ce que**
la plaque de travail (10) a, en outre, au moins deux graduations de mesure (15, 16) perpendiculaires l'une par rapport à l'autre.

3. Outil pour réparer des matériaux plats selon l'une des revendications précédentes,
**caractérisé en ce que**
le matériau de la plaque de travail (10) est choisi dans le groupe comprenant : matière synthétique, verre, matière plastique, plexiglass ou matières analogues.

4. Outil pour réparer des matériaux plats selon l'une des revendications précédentes,
**caractérisé en ce que**
les éléments de maintien (11, 12, 13, 14) sont installés de manière amovible sur le côté inférieur de la plaque de travail (10).

5. Outil pour réparer des matériaux plats selon l'une des revendications précédentes,
**caractérisé en ce que**
les éléments de maintien (11, 12, 13, 14) sont des ventouses à vide reliées notamment à une source de vide.

6. Outil pour réparer des matériaux plats selon l'une des revendications précédentes,
**caractérisé en ce que**
l'élément d'étanchéité (30) est choisi dans le groupe comprenant : caoutchouc mousse, matière synthétique telle que, par exemple, silicone, caoutchouc, polyuréthane, PVC ou analogue.

7. Outil pour réparer des matériaux plats selon l'une des revendications précédentes,
**caractérisé en ce que**
le rapport entre la hauteur de l'élément d'étanchéité (30) et le relief des éléments de fixation (11, 12, 13, 14) ou de la source de vide à l'état détendu est de 1 à 1/4 , de préférence de 1 à 1/2, d'une manière encore plus préférentielle de 1 à 3/4 et d'une manière particulièrement préférentielle, de 1 à 1.

8. Outil pour réparer des matériaux plats selon l'une quelconque des revendications précédentes,
**caractérisé en ce que**
le volume défini par la zone d'empreinte (20) est compris entre environ 35 cm³ et environ 250 cm³, de préférence entre environ 72 cm³ et environ 180 cm³ et d'une manière particulièrement préférentielle, entre environ 100 et 150 cm³ en étant en particulier à 120 cm³.

9. Outil pour réparer des matériaux plats selon l'une quelconque des revendications précédentes,
**caractérisé en ce que**
au moins un élément d'aide au positionnement (21) a une cavité ou un relief dans la plaque de travail (10).

10. Outil pour réparer des matériaux plats selon l'une des revendications précédentes,
**caractérisé en ce que**
la plaque de travail (10) comporte au moins trois éléments d'aide au positionnement (21, 22, 23).

11. Utilisation de l'outil selon l'une des revendications précédentes 1 à 10 pour effectuer un procédé de réparation de matériaux plats comprenant les étapes suivantes consistant à :
a) déterminer la zone endommagée de la surface d'un matériau plat,
b) disposer la plaque de travail (10) contre une zone non endommagée correspondant à la zone endommagée de la surface supérieure du matériau plat,
c) réaliser une empreinte de la zone non endommagée qui a la même structure de surface que la zone endommagée qui est à réparer,
d) positionner l'empreinte sur la plaque de travail (10) avec les éléments d'aide au positionnement (21) et installer la plaque de travail (10) au-dessus de la zone endommagée,
e) introduire une masse de remplissage dans l'intervalle entre la zone endommagée et l'empreinte.

12. Utilisation de l'outil pour la mise en œuvre du procédé selon la revendication 11,
**caractérisée en ce que**
la réalisation de l'empreinte selon l'étape c) comprend les étapes suivantes :
c1. introduire une masse d'empreinte dans la zone d'empreinte (20) délimitée au moins partiellement par l'élément d'étanchéité (30),
c2. laisser durcir la matière,
c3. détacher la plaque de travail (10) de la surface du matériau plat.

13. Utilisation de l'outil pour la mise en œuvre d'un procédé selon l'une des revendications 11 ou 12,
**caractérisée en ce que**
entre l'étape d)et l'étape e) on réalise l'étape suivante :
d1. introduire un tube de remplissage comme, par exemple, une canule entre l'empreinte et la zone endommagée.

14. Utilisation de l'outil pour effectuer le procédé selon l'une des revendications 11 à 13,
**caractérisée en ce que**
la masse d'empreinte pour réaliser une empreinte est choisie dans le groupe comprenant : silicone, caoutchouc, plâtre, masse de gel, poly-diméthyle-siloxane ou analogues et/ou la matière de remplissage est choisie dans le groupe comprenant : silicone, caoutchouc, plâtre, masse de gel, résine méthacrylique ou analogue.

15. Utilisation de l'outil selon l'une des revendications 1 à 10 pour réparer des tôles plates, notamment des tôles structurées ayant une forme de structure répétitive.
